# EUROPEAN PATENT APPLICATION

(11) **EP 4 159 705 A1**
(43) Date of publication of application: **05.04.2023**
(21) Application number: 20937525.2
(22) Date of filing: 28.05.2020
(51) Int. Cl.: C05G 5/12, C05G 1/00

(54) **METHOD FOR THE INDUSTRIAL MANUFACTURE OF GRANULATED FERTILISERS**

(71) Applicant: FERTINAGRO BIOTECH, S.L., 44195 Teruel (ES)
(72) Inventor: ATARES REAL, Sergio, 44195 TERUEL (ES); ROMERO LOPEZ, Joaquin, 44195 TERUEL (ES); SALAET MADORRAN, Ignasi, 44195 TERUEL (ES); FUERTES DOÑATE, Carlos, 44195 TERUEL (ES); CABALLERO MOLADA, Marcos, 44195 TERUEL (ES); SANCHEZ SANCHEZ, Laura, 44195 TERUEL (ES)
(74) Representative: González López-Menchero, Álvaro Luis
(86) International application number: PCT/ES2020/070354
(87) International publication number: WO 2021/240028

(57) **Abstract**

The invention provides a method for the industrial manufacture of granulated fertilisers of the type including the steps of granulation, drying, control of the granule temperature, and sifting, granulation being carried out using a starting material in the form of a thick homogenized suspension in which soluble and insoluble components are present, and in which, prior to the granulation step, said starting material is premixed with other selected raw materials with a high content of nitrogen, phosphorus, potassium, sulfur, calcium, organic matter, micronutrients and combinations thereof.

## Description

The present invention relates to a method for the industrial manufacture of granulated fertilisers, of the type including the steps of granulation, drying, control of the granule temperature and sifting, granulation being carried out using a starting material in the form of a thick homogenized suspension in which soluble and insoluble components are present.

Thus, the method of the invention allows obtaining granulated fertilisers that are suited to the use requirements, guaranteeing the obtainment of fertilizing granules including initial materials with the desired components even though these have very different physical and/or chemical nature.

Various granulated fertiliser manufacturing processes are well known, which basically include those based on chemical methods (chemical granulation), steam granulation methods or compaction methods.

Chemical granulation processes are essentially based on a chemical reaction of the desired components intended for the final product, whether liquid, solid or gaseous, resulting in a state of agglomeration and controlled particle growth. Generally, these initial desired components in solid, liquid or gaseous form are added to a granulator and the wet, plastic material is dried, the agglomerates then being consolidated, and a granule being formed. Evaporation of the water strengthens the bonds between the individual particles of each granule. The product is then sieved, cooled and stored (Taylor, L. 1992. Methods of production of NPK granulated fertilisers. Proceedings of the Seminar on Balanced Fertilization. Palrnaven-INPOFOS. Valencia, Venezuela. October 1992).

Steam granulation uses only solid starting components in powder form, which are fed into a granulator with steam and/or water to provide sufficient liquid phase, heat and plasticity to allow the dry material to agglomerate and form granules. The wet, plastic granules are dried in a dryer and then sifted. The reject material is recycled to the granulator. It is usually necessary to cool the material, either before or after sifting, depending on the type of fertiliser and local conditions (temperature and humidity). Steam granulation does not require chemical reactions for granule production but has limited application due to its cost and the limited products that can be produced.

The compaction method uses mechanical force to form dense particles (granules) from particulate components into small particles or powder. It is basically a dry granulation, with no liquid medium or chemical reaction to "cement" the granules. The fine particles are subjected to sufficiently high pressure to bring them closely together and bring the surfaces close enough for intermolecular and electrostatic forces to hold the granule. For this method to be efficient, the initial components must have a very low moisture content, and components such as urea, superphosphate and ammonium nitrate cannot be used because of chemical compatibility and hygroscopicity. With this process, some compacted products form sharp edges which, if not properly treated before handling (surface polishing and/or hardening), tend to break and create very fine material. The granules produced by compaction are not spherical and have a more irregular shape than those obtained by granulation.

In view of the different known processes, the chemical granulation method, as in the case of the present invention, is the most advantageous one, being easily adaptable to the physical state of the starting components and industrially scalable.

Thus, for example, document ES2379135T3 describes a method for the preparation of granulated industrial nitrogen-calcium fertiliser from the reaction mixture resulting from decomposition of mineral salts of calcium cations with nitric acid and processing of the obtained melt wherein, starting from the reaction mixture resulting from the decomposition of mineral salts of calcium cations with nitric acid, the solution is thickened by means of a thickener and the superheated solution (from 100 to 170 °C) is injected into a granulator, a powder binder is added, granulated and adjusted, the solution is thickened by a thickener and the superheated solution (from 100 to 170 °C) is injected into a granulator, a powder phase is added, granulated and the temperature of the granulate is adjusted, the granulated material is screened, the appropriate fraction of the granulated fertiliser is separated, the oversized fraction is grind and, together with the undersized fraction, is cooled and returned into the granulator.

The main disadvantage of these known chemical granulation processes is that, due to the different physical nature of the initial components, it is often necessary to add binding agents to formulate the granules, which makes the process more expensive and adds additional components, sometimes not recommended, to the final granulated fertiliser obtained.

The present invention solves these disadvantages of the known methods by providing a method for the industrial manufacture of granulated fertilisers, the method being of the type including steps of granulation, drying, control of granule temperature and sifting, wherein the starting material used consists of water soluble and insoluble components and wherein the method includes, prior to the granulation step, a step of obtaining the starting material in the form of a homogenized mixture as a thick aqueous suspension, also referred to in the art as a slurry, the soluble and insoluble components making up the starting material being selected from sugars, amino acids, organic acids, polyamines, alcohols, nucleotides, boric acid, leonardite, algae extracts and combinations thereof, and a step of premixing this starting material with other raw materials selected from among products with high nitrogen content, products with high phosphorus content, products with high potassium content, products with high sulfur content, products with high calcium content, organic materials, micronutrients and combinations thereof.

In one embodiment of the invention, the step of obtaining the starting material with the aforementioned soluble and insoluble components in the form of a homogenized mixture as a thick aqueous suspension is carried out in an in-line disperser. The use of this particular technology allows these non-soluble and insoluble raw materials to form a homogenized mixture, as well as to obtain a mixture with the optimum particle size for subsequent milling processes, such size being suited to be ideal for passage through the mesh in subsequent sifting steps.

In another embodiment of the invention, the pre-mixing step of this starting material with the other raw materials indicated above is carried out in a paddle mixer. The advantage of the use of the paddle mixer in the method of the invention is based on the fact that this equipment is capable of mixing large quantities of solid material with already dispersed liquid material. Other possibilities of using mixers entail disadvantages for the present invention, since they usually employ water as a vehiculation medium, which entails both a lengthening of the processing time and an extra cost due to the need to remove more water from the granulated products.

The sugars comprising the starting material can be selected from the group consisting of sucrose, trehalose, fructose, glucose, arabinose, maltose and any combination thereof.

Preferably, these sugars are present in the granulated fertiliser obtained according to the method of the invention in a proportion of 0.1 to 15% by weight.

The amino acids forming the starting material can be selected from the group consisting of threonine, lysine, phenylalanine, glutamic acid, methionine, γ-aminobutyric acid, ornithine, glycine, glutamine, aspartic acid, serine, asparagine, tyrosine, tryptophan, valine, leucine, isoleucine, proline, 4-hydroxyproline, arginine, histidine, alanine, cysteine and any combination thereof.

Preferably, these amino acids are present in the granulated fertiliser obtained according to the method of the invention in a proportion of 0.01 to 30% by weight.

The organic acids comprising the starting material can be selected from the group consisting of succinic acid, oxalic acid, gluconic acid, threonic acid, fumaric acid and any combination thereof.

Preferably, these organic acids are present in the granulated fertiliser obtained according to the method of the invention in a proportion of 0.01 to 10% by weight. The polyamines comprising the starting material can be selected from the group consisting of putrescine, spermidine, spermine and any combination thereof.

Preferably, these polyamines are present in the granulated fertiliser obtained according to the method of the invention in a proportion of 0.01 to 10% by weight.

The alcohols forming the starting material can be selected from the group consisting of glycerol and its derivatives, such as glycerin.

Preferably, these alcohols are present in the granulated fertiliser obtained according to the method of the invention in a proportion of 0.01 to 25% by weight.

The nucleotides forming the starting material can be selected from the group consisting of adenine, guanine, cytosine, thymine and any combination thereof.

Preferably, these nucleotides are present in the granulated fertiliser obtained according to the method of the invention in a proportion of from 0.01 to 5% by weight.

The leonardite present in the starting material can be any leonardite from any source and rich in humic and fulvic acids.

Preferably, this leonardite is present in the granulated fertiliser obtained according to the method of the invention in a proportion of from 1 to 40% by weight.

Exemplary algae extracts present in the starting material can be selected from any algae extract with high sorbitol, alginic acid and/or mannitol content. These algae extracts are present in a proportion of 0.01 to 15% by weight in the final fertiliser product obtained according to the method of the invention.

Examples of products with high nitrogen content are urea, ammonium sulfate, potassium nitrate, ammonium nitrosulfate, ammonium nitrate, calcium nitrate and the like. Preferably, these products with high nitrogen content are present in the granulated fertiliser obtained according to the method of the invention in a proportion of 1 to 75% by weight.

Examples of products with high phosphorus content are phosphate rock, triple superphosphate, superphosphate, phosphoric acid, struvite and the like. Preferably, these products with high phosphorus content are present in the granulated fertiliser obtained according to the method of the invention in a proportion of 1 to 75% by weight.

Examples of products with high potassium content are feldspar, potassium chloride, potassium sulfate, double potassium and magnesium sulfate, potassium hydroxide and the like. Preferably, these products with high potassium content are present in the granulated fertiliser obtained according to the method of the invention in a proportion of 1 to 75% by weight.

Examples of products with high sulfur content are elemental sulfur. Preferably, these products with high sulfur content are present in the granulated fertiliser obtained according to the method of the invention in a proportion of 1 to 70% by weight.

Examples of products with high calcium content are calcium chloride, calcium cyanamide, calcium sulfate, dolomite, limestone, calcium oxide, calcium hydroxide and the like. Preferably, these products with high calcium content are present in the granulated fertiliser obtained according to the method of the invention in a proportion of 1 to 45% by weight.

Examples of organic materials are manures from livestock, for example cattle, sheep, pigs, rabbits, chickens and the like. Preferably, these organic materials are present in the granulated fertiliser obtained according to the method of the invention in a proportion of 1 to 40% by weight.

Examples of micronutrients are iron, zinc, manganese, copper, molybdenum cobalt, which may be in the form of salts such as sulfates or chlorides, or combined with complexing agents, such as in the form of humates, citrates, gluconates, heptagluconates, aminoates and the like, or combined with chelating agents, such as EDTA, EDDHA, DPTA and the like. Preferably, these micronutrients are present in the granulated fertiliser obtained according to the method of the invention in a proportion of 1 to 30% by weight.

Furthermore, in a preferred embodiment, the method for the industrial manufacture of granulated fertilisers according to the invention includes the granulation of the premix obtained from the aforementioned steps together with an aqueous extract of useful microorganisms to favor the activation of the soil microbiota and thus provide, depending on their nature, a higher nitrogen fixation, an improvement in the solubilization of potassium or a mobilization of the different soil micronutrients. This aqueous extract, in addition to providing the agronomic advantages due to the same extract, greatly facilitates the formation of granules thanks to the water in which these microorganisms are embedded.

Preferably, the microorganisms used and added in the granulation step are selected from *Pichia guilliermondii, Azotobacter chroococcum, Bacillus amyloliquefaciens, Bacillus simplex, Azoospirillum lipoferum, Pantoea alii, Rhizobium radiobacter, Paenibacilus polymyxa* and combinations thereof. The advantage of selecting these specific microorganisms is that they are described in the literature as being able to improve nitrogen fixation, to facilitate phosphorus and potassium solubilization, to release siderophores or to protect crops against abiotic stress.

In one embodiment of the method of the invention, in the step of obtaining the starting material in the form of a homogenized mixture as a thick aqueous suspension, the aforementioned soluble and insoluble components are used in a proportion by weight of 0.5 to 10% with respect to the weight of the product to be granulated in the granulation step.

In another embodiment of the method of the invention, in the premixing step, the other raw materials indicated are in a proportion between 5 and 90% by weight with respect to the weight of the product to be granulated in the granulation step.

In yet another embodiment of the method of the invention, the number of microorganism extracts added in the granulation step ranges from 5 to 90% by weight with respect to the weight of the product to be granulated.

### Examples

### General method for the industrial manufacture of granulated fertilisers

The method starts with a combination of water soluble and insoluble components to obtain a starting material in the form of a homogenized mixture as a thick aqueous suspension or slurry, which is added to an in-line disperser. This mixture is added to a paddle mixer together with the different raw materials, wherein a premixing of the raw materials together with the slurry is carried out to subsequently enter the granulation process.

In the granulation process, the aqueous extract of the different types of microorganisms is added. Once granulation has been carried out, which can be done with any suitable technology, and the granules have been formed, generally with a relative humidity of between 5%-10%, the same are subjected to a drying step, for example in a rotary dryer, to obtain dry granules with a humidity of less than 3%. Subsequently, the entire mass of granules is introduced in a conditioner for gradual temperature reduction to avoid rapid cooling.

Finally, the product is sifted according to the size selected, the granules with the appropriate size are conveyed for storage of same and those which are outside the size range are conveyed to a mill, where the entire mass is ground to be reintroduced into the granulator.

### Exemplary embodiment for obtaining a granulated fertiliser

Starting material consists of water-soluble and water-insoluble components: 10% by weight of a combination of:
- 60% by weight of pyroglutamic acid
- 10% by weight of maltose
- 25% by weight of methionine
- 5% by weight of putrescine
water up to 100%.

Once this mixture is made, it is added in a proportion of 0.1% continuously, in order to have 1% in the final fertiliser mixture, to the paddle mixer together with the following raw materials, with a particle size between 300 µm and 1,200 µm, which implies that these raw materials have been previously milled.
- 24% by weight of leonardite
- 65% by weight of feldspar

The output humidity of this second mixture ranges between 9% and 15%, since the raw materials also contribute some humidity. The product obtained is introduced into the granulator, where the extracts of the different microorganisms are added in a 10% by weight, the percentage of the extracts of microorganisms varies depending on the concentration of the same, for example between 4% and 18%, so that the final concentration on the fertiliser sample ranges between 0.2% and 2% by weight.

The granules are formed in the granulator and the humidity is regulated by adding water if required to form the granule. The already formed granulated product comes out of the granulator with a humidity between 6% and 10%. The granules are then introduced into the dryer at a temperature between 330°C and 380°C at the head of the process and with an output temperature between 80°C and 95°C. The output humidity content of the product obtained from the dryer ranges between 2% and 4%.

The product is then passed through a temperature conditioner for a gradual temperature decrease from 80 °C-95 °C to room temperature, e.g., by applying a stream of dry air, thus preventing the granule from cooling by absorbing humidity.

Once cooled, the granules will be sifted to obtain a product with an average particle size between 2.5 mm and 5 mm. Granules that are not in this size range will be introduced in a mill to be fed back into the granulator.

### Comparative example

In order to be able to compare the method described here with conventional granulation processes, a quality analysis of the different components added is carried out, i.e., an analytical measurement of a fixed quantity of granules produced in each of the processes, of the invention and conventional. In this way it can be verified how the manufacture of fertilisers with the method described herein, together with the selected raw materials, provides a high-quality granulated fertiliser.

For this purpose, as a comparative example, a fertiliser product is obtained using a conventional granulator and the results are compared with the same product obtained according to the method of the invention.

A representative sample is taken in triplicate, taking for each replicate (R1, R2, R3) 1 kg of sample, from a batch quantity of 100 kg. The parameters analyzed are derived from premixing and adding to the paddle mixer, in particular by measuring the richness of some selected components, the measurement being extrapolatable to the rest of the components of the final fertiliser obtained with each of the processes (measurements obtained by ultra-high resolution liquid chromatography-mass spectrometry).

The results obtained are shown in the following table:

| | Comparative example, in granulator | | | | | | |
|---|---|---|---|---|---|---|---|
| | Theoretical | R1 | R2 | R3 | Average | Deviation | % Error vs. standard deviation |
| Pyroglutamic acid | 0.60% | 0.42 % | 0.52% | 0.69% | 0.54% | 0.14% | 22.75% |
| Maltose | 0.10% | 0.11 % | 0.16% | 0.07% | 0.11% | 0.05% | 45.09% |
| Methionine | 0.25% | 0.10 % | 0.23% | 0.19% | 0.17% | 0.07% | 26.63% |
| Putrescine | 0.05% | 0% | 0.02% | 0.05% | 0.02% | 0.03% | 50.33% |
| Method according to the invention | | | | | | | |

| | Theoretical | R1 | R2 | R3 | Average | Deviation | % Error vs. standard deviation |
|---|---|---|---|---|---|---|---|
| Pyroglutamic acid | 0.60% | 0.59 % | 0.63% | 0.60% | 0.61% | 0.02% | 3.47% |
| Maltose | 0.10% | 0.11 % | 0.10% | 0.09% | 0.10% | 0.01% | 10.00% |
| Methionine | 0.25% | 0.23& | 0.25% | 0.24% | 0.24% | 0.01% | 4.00% |
| Putrescine | 0.05% | 0.04 % | 0.05% | 0.01% | 0.05% | 0.01% | 20.00% |

As can be observed the error % is considerably reduced in the method according to the invention, which makes it possible to ensure that this novel method for the industrial manufacture of fertilisers is much more homogeneous.

## Claims

1. A method for the industrial manufacture of granulated fertilisers of the type including the steps of granulation, drying, control of the granule temperature, and sifting, **characterized in that** the starting material used consists of water-soluble and water-insoluble components in a proportion by weight of 0.5 to 10% with respect to the weight of the product to be granulated in the granulation step, and **in that** the method includes, prior to the granulation step, a step of obtaining the starting material in the form of a homogenized mixture as a thick aqueous suspension, the soluble and insoluble components being selected from sugars, amino acids, organic acids, polyamines, alcohols, nucleotides, boric acid, leonardite, algae extracts and combinations thereof, and a step of premixing this starting material with other raw materials selected from products with high nitrogen content, products with high phosphorus content, products with high potassium content, products with high sulfur content, products with high calcium content, organic materials, micronutrients and combinations thereof in a proportion between 5 and 90% by weight with respect to the weight of the product to be granulated in the granulation step.

2. The method for the industrial manufacture of granulated fertilisers according to claim 1, wherein the step of obtaining the starting material with the soluble and insoluble components in the form of homogenized mixture as a thick aqueous suspension is carried out in an in-line disperser.

3. The method for the industrial manufacture of granulated fertilisers according to claim 1, wherein the pre-mixing step of the starting material with the other raw materials is carried out in a paddle mixer.

4. The method for the industrial manufacture of granulated fertilisers according to claim 1, wherein the sugars are selected from the group consisting of sucrose, trehalose, fructose, glucose, arabinose, maltose and any combination thereof.

5. The method for the industrial manufacture of granulated fertilisers according to claim 1, wherein the sugars are present in the granulated fertiliser obtained in a proportion of 0.1 to 15% by weight.

6. The method for the industrial manufacture of granulated fertilisers according to claim 1, wherein the amino acids are selected from the group consisting of threonine, lysine, phenylalanine, glutamic acid, methionine, γ-aminobutyric acid, ornithine, glycine, glutamine, aspartic acid, serine, asparagine, tyrosine, tryptophan, valine, leucine, isoleucine, proline, 4-hydroxyproline, arginine, histidine, alanine, cysteine and any combination thereof.

7. The method for the industrial manufacture of granulated fertilisers according to claim 1, wherein the amino acids are present in the granulated fertiliser in a proportion of 0.01 to 30% by weight.

8. The method for the industrial manufacture of granulated fertilisers according to claim 1, wherein the organic acids are selected from the group consisting of succinic acid, oxalic acid, gluconic acid, threonic acid, fumaric acid and any combination thereof.

9. The method for the industrial manufacture of granulated fertilisers according to claim 1, wherein the organic acids are present in the granulated fertiliser obtained in a proportion of 0.01 to 10% by weight.

10. The method for the industrial manufacture of granulated fertilisers according to claim 1, wherein the polyamines are selected from the group consisting of putrescine, spermidine, spermine and any combination thereof.

11. The method for the industrial manufacture of granulated fertilisers according to claim 1, wherein polyamines are present in the granulated fertiliser obtained in a proportion of 0.01 to 10% by weight.

12. The method for the industrial manufacture of granulated fertilisers according to claim 1, wherein the alcohols are selected from the group consisting of glycerol and its derivatives.

13. The method for the industrial manufacture of granulated fertilisers according to claim 1, wherein the alcohols are present in the granulated fertiliser obtained in a proportion of 0.01 to 25% by weight.

14. The method for the industrial manufacture of granulated fertilisers according to claim 1, wherein the nucleotides are selected from the group consisting of adenine, guanine, cytosine, thymine and any combination thereof.

15. The method for the industrial manufacture of granulated fertilisers according to claim 1, wherein the nucleotides are present in the granulated fertiliser obtained in a proportion of 0.01 to 5% by weight.

16. The method for the industrial manufacture of granulated fertilisers according to claim 1, wherein leonardite is present in the granulated fertiliser obtained in a proportion of 1 to 40% by weight.

17. The method for the industrial manufacture of granulated fertilisers according to claim 1, wherein the algae extracts are present in a proportion of 0.01 to 15% by weight in the granulated fertiliser obtained.

18. The method for the industrial manufacture of granulated fertilisers according to claim 1, wherein the products with high nitrogen content are present in the granulated fertiliser obtained in a proportion of 1 to 75% by weight.

19. The method for the industrial manufacture of granulated fertilisers according to claim 1, wherein the products with high phosphorus content are present in the granulated fertiliser obtained in a proportion of 1 to 75% by weight.

20. The method for the industrial manufacture of granulated fertilisers according to claim 1, wherein the products with high potassium content are present in the granulated fertiliser obtained in a proportion of 1 to 75% by weight.

21. The method for the industrial manufacture of granulated fertilisers according to claim 1, wherein the products with high sulfur content are present in the granulated fertiliser obtained in a proportion of 1 to 70% by weight.

22. The method for the industrial manufacture of granulated fertilisers according to claim 1, wherein the products with high calcium content are present in the granulated fertiliser obtained in a proportion of 1 to 45% by weight.

23. The method for the industrial manufacture of granulated fertilisers according to claim 1, wherein the organic materials are present in the granulated fertiliser obtained in a proportion of 1 to 40% by weight.

24. The method for the industrial manufacture of granulated fertilisers according to claim 1, wherein the micronutrients are present in the granulated fertiliser obtained in a proportion of 1 to 30% by weight.

25. The method for the industrial manufacture of granulated fertilisers according to any of claims 1 to 24, further including the granulation of the premix together with an aqueous microorganism extract selected from the group consisting of *Pichia guilliermondii, Azotobacter chroococcum, Bacillus amyloliquefaciens, Bacillus simplex, Azoospirillum lipoferum, Pantoea alii, Rhizobium radiobacter, Paenibacilus polymyxa* and combinations thereof, in an amount between 5 and 90% by weight with respect to the weight of the product to be granulated.
